# FASCICULE DE BREVET EUROPEEN

(11) **EP 1 130 230 B1**
(45) Date de publication et mention de la délivrance du brevet: **23.03.2005**
(21) Numéro de dépôt: 01400145.7
(22) Date de dépôt: 18.01.2001
(51) Int. Cl.: F01N 3/023, F02D 41/40

(54) **Système d'aide à la régénération d'un filtre à particules intégré dans une ligne d'échappement d'un moteur Diesel de véhicule automobile**
Vorrichtung zur Regenerierung eines Partikelfilters in einer selbstgezündeten Brennkraftmaschine
System to regenerate an exhaust particle filter in a diesel engine

(30) Priorité: 20.01.2000 FR 0000701
(43) Date de publication de la demande: 05.09.2001
(73) Titulaire: Peugeot Citroen Automobiles SA, 92200 Neuilly sur Seine (FR)
(72) Inventeur: Le Tallec, Patrice, 78500 Sartrouville (FR); Salvat, Olivier, 75010 Paris (FR)
(74) Mandataire: Habasque, Etienne Joel Jean-François

(56) Documents cités:
- EP-A- 0 411 445
- DE-A- 19 746 855
- FR-A- 2 774 427
- US-A- 4 538 411
- US-A- 4 685 290
- LANGKABEL G I: "LA PLUS GRANDE INVENTION DEPUIS LE MOTEUR DIESEL" REVUE AUTOMOBILE,CH,HALLWAG S.A. BERNE, vol. 94, no. 19, 6 mai 1999 (1999-05-06), page 21 XP000825692 ISSN: 0035-0761
- PATENT ABSTRACTS OF JAPAN vol. 1996, no. 02, 29 février 1996 (1996-02-29) & JP 07 259533 A (NIPPON SOKEN INC), 9 octobre 1995 (1995-10-09)
- DIRECTION DE LA COMMUNICATION: "Particule Filter System" PEUGEOT PRESS RELEASE, [en ligne] 15 avril 1999 (1999-04-15), XP002148817 Extrait de l'Internet: <URL:www.psa.fr/presse/en_99018.html> [extrait le 2000-09-28]

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On pourra par exemple se reporter au document LANGKABEL G.I: LA PLUS GRANDE INVENTION DEPUIS LE MOTEUR DIESEL, REVUE AUTOMOBILE, CH, HALLWAG S.A. BERNE, volume 94, n° 19, 6 mai 1999 (1999-05-06), page 21, qui décrit un système conforme au préambule de la revendication 1.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant différents organes associés au moteur, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, comportant des injecteurs à commande électrique, associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, caractérisé en ce qu'il comporte des moyens de contrôle du fonctionnement des moyens d'admission, des moyens de recyclage, du turbocompresseur et/ou du système d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de contrôle comprennent des moyens de mémorisation d'un état de charge de référence du filtre à particules, et des moyens de réactualisation de cet état de charge de référence par mesure de celui-ci après au moins certaines phases de régénération de ce filtre.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant un moteur Diesel de véhicule automobile, et les différents organes associés à celui-ci ; et
- la Fig.2 représente un schéma synoptique illustrant la structure des moyens de réactualisation d'une information d'état de charge de référence du filtre.

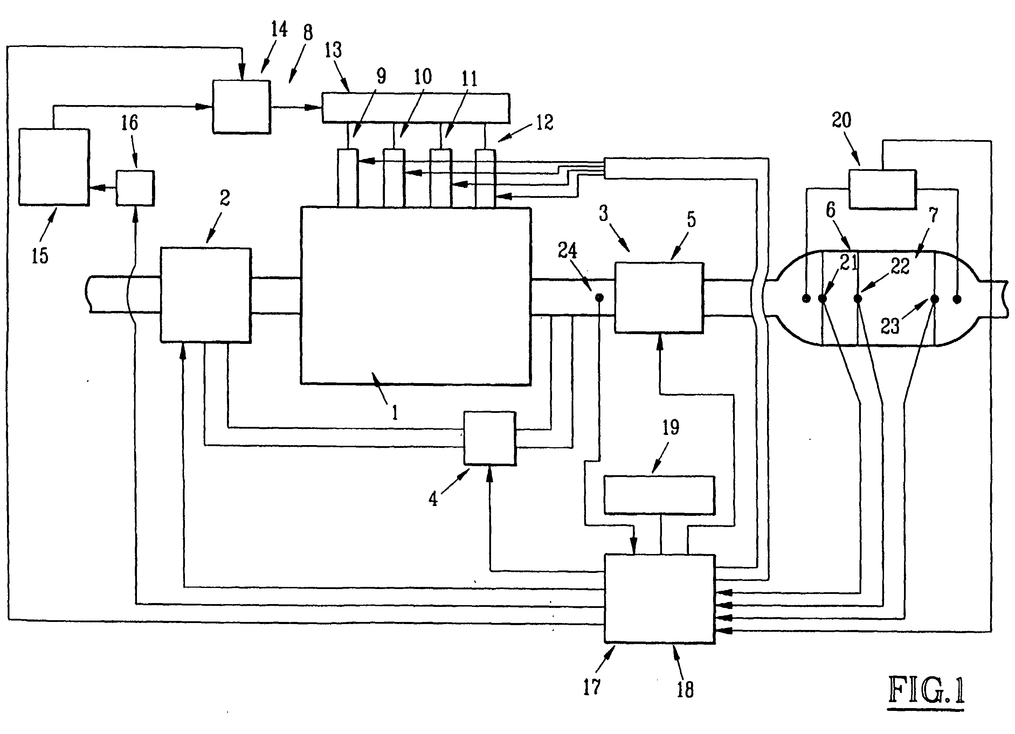

On a en effet représenté sur cette figure 1, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, dans la ligne d 'échappement.

Le moteur est également associé à un système d'alimentation commune en carburant des cylindres de celui-ci. Ce système est désigné par la référence générale 8 sur cette figure et comporte par exemple des injecteurs à commande électrique associés à ces cylindres.

Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15, pour permettre l'injection d'une certaine quantité de cet additif dans le carburant.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour piloter le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le calculateur peut également recevoir une information de teneur en oxygène des gaz d'échappement à partir d'une sonde Lambda λ proportionnelle désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Les moyens de contrôle 17 comportent également des moyens de mémorisation d'une information d'état de charge de référence du filtre à particules et des moyens de réactualisation de cette information d'état de charge de référence par mesure de celui-ci après au moins certaines phases de régénération du filtre.

En effet, les moyens de contrôle sont par exemple adaptés pour déclencher la régénération du filtre à particules si la charge de celui-ci atteint une valeur prédéterminée.

Cette valeur prédéterminée peut par exemple être établie à partir d'une charge de référence qui correspond à l'état du filtre lorsque celui-ci est considéré comme « propre ».

L'établissement initial de cette valeur de référence ne pose pas de problème lorsque le filtre est neuf. Mais il convient de recaler cette valeur au cours de la vie du filtre car la charge de celui-ci n'est pas forcément égale à la valeur de référence établie initialement, après sa régénération.

Pour prendre en compte ces variations de l'état de charge de référence, on mesure la charge du filtre après au moins certaines phases de régénération de celui-ci pour réactualiser l'information d'état de charge de référence du filtre utilisé par les moyens de contrôle.

Ceci permet alors de recaler ce niveau pour optimiser par exemple le déclenchement de la régénération du filtre par ces moyens de contrôle.

Ce recalage peut être limité à des phases de régénération qui sont estimées suffisantes, c'est-à-dire par exemple au cours desquelles la température de sortie du catalyseur a dépassé un seuil prédéterminé pendant un temps supérieur à une valeur prédéterminée où lorsque le moteur a fonctionné dans des conditions prédéterminées pendant une période de temps minimum prédéterminée.

Si ces conditions sont remplies, on estime alors que l'état de charge du filtre après régénération doit être utilisé comme état de charge de référence pour la gestion du fonctionnement du système.

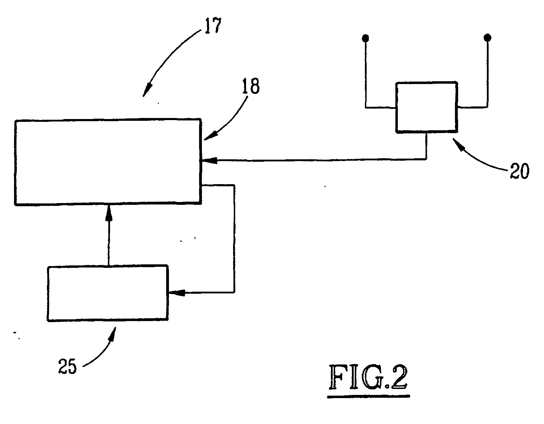

Ceci est illustré sur la figure 2, sur laquelle on reconnaît les moyens de contrôle 17 et plus particulièrement le calculateur 18 et des moyens de mémorisation 25 d'un état de charge de référence du filtre à particules.

Le calculateur 18 est relié au capteur de pression différentielle 20 disposé aux bornes du filtre à particules, dont les informations de sortie sont représentatives de l'état de charge du filtre.

Le calculateur est alors adapté pour évaluer qu'une régénération du filtre s'est déroulée dans des conditions satisfaisantes pour acquérir l'état de charge du filtre après cette régénération et réactualiser l'état de charge de référence stocké dans les moyens 25 selon l'état acquis à partir du capteur de pression différentielle 20.

## Revendications

1. Système d'aide à la régénération d'un filtre à particules intégré dans une ligne d'échappement d'un moteur Diesel de véhicule automobile, comportant différents organes associés au moteur, parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation commune en carburant des cylindres du moteur, comportant des injecteurs à commande électrique (9,10,11,12), associés à ces cylindres,
- des moyens (16) d'ajout au carburant d'un additif destiné à se déposer sur le filtre à particules (7) pour abaisser la température de combustion des particules piégées dans celui-ci,
- des moyens (20,21,22,23,24) d'acquisition d'informations relatives à différents paramètres de fonctionnement du moteur et des organes associés à celui-ci, **caractérisé en ce qu'**il comporte des moyens (17) de contrôle du fonctionnement des moyens (2) d'admission, des moyens (4) de recyclage, du turbocompresseur (5) et/ou du système (8) d'alimentation pour contrôler le fonctionnement du moteur, ces moyens étant en outre adaptés pour déclencher une phase de régénération du filtre à particules (7) par combustion des particules piégées dans celui-ci en enclenchant une phase d'injections multiples de carburant dans les cylindres du moteur pendant leur phase de détente, et **en ce que** les moyens de contrôle (17) comprennent des moyens (25) de mémorisation d'un état de charge de référence du filtre à particules (7), et des moyens (18) de réactualisation de cet état de charge de référence par mesure de celui-ci après au moins certaines phases de régénération de ce filtre.

2. Système selon la revendication 1, **caractérisé en ce que** les moyens de contrôle (17) sont adaptés pour déterminer l'état de charge du filtre à partir des informations de sortie d'un capteur de pression différentielle (20) disposé aux bornes du filtre.

## Patentansprüche

1. System zur Regenerierung eines Partikelfilters, der in eine Abgasleitung eines Dieselmotors für Kraftfahrzeuge eingebaut ist, mit verschiedenen Organen, die mit dem Motor verbunden sind, und welche bestehen aus:
- Lufteinlassvorrichtungen (2) für den Motor,
- Vorrichtungen (4) zum Recyceln der Abgase des Motors an dessen Eingang,
- einem Turbokompressor (5),
- einem Oxidationskatalysator (6), der stromaufwärts von dem Partikelfilter (7) in der Abgasleitung angeordnet ist;
- einem gemeinsamen Kraftstoffversorgungssystem (8) für die Zylinder des Motors mit Injektoren mit elektrischer Steuerung (9, 10, 11, 12), die diesen Zylindern zugeordnet sind,
- Vorrichtungen (16) zum Hinzufügen eines Zusatzstoffes zu dem Kraftstoff, welcher dafür bestimmt ist, sich auf dem Partikelfilter (7) abzusetzen, um die Verbrennungstemperatur der in diesem gefangenen Partikel abzusenken,
- Vorrichtungen (20, 21, 22, 23, 24) zur Erfassung von Informationen, welche mit verschiedenen Betriebsparametem des Motors und der mit diesem verbundenen Organe zusammenhängen, **dadurch gekennzeichnet, dass** es Vorrichtungen (17) zur Steuerung des Betriebs der Einlassvorrichtungen (2), der Recyclingvorrichtungen (4), des Turbokompressors (5) und/oder des Versorgungssystems (8) aufweist, um den Betrieb des Motors zu steuern, wobei diese Vorrichtungen außerdem dafür eingerichtet sind, eine Regenerierungsphase des Partikelfilters (7) durch Verbrennung der in diesem gefangenen Partikel auszulösen, indem eine Mehrfacheinspritzphase des Kraftstoffs in die Zylinder des Motors während ihrer Entspannungsphase eingeleitet wird, und dass die Steuervorrichtungen (17) Vorrichtungen (25) zur Speicherung eines Referenzbeladungszustands des Partikelfilters (7) und Vorrichtungen (18) zur erneuten Aktualisierung dieses Referenzbeladungszustands durch dessen Messung nach zumindest einigen Regenerierungsphasen dieses Filters aufweisen.

2. System gemäß Anspruch 1, **dadurch gekennzeichnet, dass** die Steuervorrichtungen (17) dafür eingerichtet sind, den Beladungszustand des Filters ausgehend von den Ausgangsinformationen eines Differenzdrucksensors (20) zu bestimmten, der an den Anschlussklemmen des Filters angeordnet ist.

## Claims

1. A system for assisting the regeneration of a particle filter integrated within an exhaust line of a diesel engine of a motor vehicle, comprising various components linked to the engine, including:
- means (2) for intake of air into the engine,
- means (4) for recycling exhaust gas of the engine to. the inlet of said engine,
- a turbocharger (5),
- an oxidation catalyst (6) arranged upstream of the particle filter (7) in the exhaust line,
- a system (8) for common supply of fuel to the cylinders of the engine, comprising electrically controlled injectors (9, 10, 11, 12) linked to said cylinders,
- means (16) for addition to the fuel of an additive intended to be deposited on the particle filter (7) for lowering the combustion temperature of the particles trapped in said filter,
- means (20, 21, 22, 23, 24) for acquisition of data relating to various operational parameters of the engine and of the components linked to said engine, **characterised in that** said system comprises means (17) for controlling the operation of the intake means (2), of the recycling means (4), of the turbocharger (5) and/or of the supply system (8) for controlling the operation of the engine, said means being moreover adapted for triggering a phase of regeneration of the particle filter (7) by combustion of the particles trapped within said filter by actuating a phase of multiple injections of fuel into the cylinders of the engine during their expansion phase, and **in that** the control means (17) comprise means (25) for storage of a reference-load state of the particle filter (7) and means (18) for updating this reference-load state by measurement of said state after at least certain phases of regeneration of said filter.

2. System according to Claim 1, **characterised in that** the control means (17) are adapted for determining the load state of the filter from output data of a differential-pressure transducer (20) arranged at the terminals of the filter.
